# EUROPÄISCHE PATENTANMELDUNG

(11) **EP 1 967 421 A1**
(43) Veröffentlichungstag der Anmeldung: **10.09.2008**
(21) Anmeldenummer: 08003949.8
(22) Anmeldetag: 04.03.2008
(51) Int. Cl.: B60R 21/215, B60R 21/205

(54) **Kraftfahrzeuginnenausstattungsteil mit einer Gassackeinrichtung**

(30) Priorität: 05.03.2007 AT 3432007
(71) Anmelder: Intier Automotive Eybl GmbH (Ebergassing) & Co. OHG, 2435 Ebergassing (AT)
(72) Erfinder: Schalude, Willi, 77955 Ettenheim (DE); Reil, Markus, 7000 Eisenstadt (AT); Kirchbaumer, Georg, 36251 Bad Hersfeld (DE); Girard, Jean Christoph, 25200 Montbealiard (DE)
(74) Vertreter: Völger, Silke Beatrix

(57) **Zusammenfassung**

Ein Innenausstattungsteil mit einer Gassackeinrichtung weist ein Gassackmodul (1) mit einem topfförmigen Gehäuse (11) zur Aufnahme eines Gassacks (12) auf, das am abstehenden Ende eines Schusskanals (24) an einem formstabilen Träger (2) angebracht ist. In dem Träger (2) ist durch Aufreiß- (21) und/oder Schamierfinien (22) ein Öffnungsabschnitt (23) zur Entfaltung des Gassacks vorgegeben. Es stellt sich das Problem, ein Abreißen des Öffnungsabschnitts (23) bei der Entfaltung des Gassacks (12) durch eine einfache Maßnahme zu unterbinden. Hierzu wird vorgeschlagen, dass an dem Öffnungsabschnitt (23) ein erster Abschnitt (41) eines Haltebands (4) angebracht ist, das innerhalb des Schusskanals (24) bis zur Ansatzstelle des Gassackmoduls (1) verläuft und dort befestigt ist. Im Sinne einer noch weitergehenden Verbesserung wird zusätzlich vorgeschlagen, dass die Anbringung des Haffebands (4) am Öffnungsabschnitt (23) in der Nähe zu der Schamiertlnie (22) und zu dieser ausgerichtet ansetzt und das Halteband (4) annähemd straff durch den Schusskanal (24) geführt ist.

## Beschreibung

Die vorliegende Erfindung betrifft ein Innenausstattungsteil mit einer Gassackeinrichtung zum Einbau in ein Kraftfahrzeug und insbesondere einen Teil einer Instrumententafel mit einem Gassackmodul.

Ein Innenausstaltungsteil mit einer Gassackeinrichtung zum Einbau in ein Kraftfahrzeug offenbart die Druckschrift DE 43 11 241 C1. In der darin dargestellten Ausführungsform ist vorgesehen, den das Gassackmodul abdeckenden Öffnungsabschnitt oder Deckel durch ein Fangband gegen die Tragstruktur zu sichern. Hierbei wird allerdings das Fangband außen an dem Gassackmodul entlang geführt. Deshalb kann das Gassackmodul nicht ohne weiteres direkt an der Tragstruktur des Irtnenausstattungsteils befestigt werden. Außerdem ergibt sich durch die gewählte Anordnung des Fangbands beim Aufstoßen des Öffnungsabschnitts dessen Trennung von den feststehenden übrigen Abschnitten des Innenausstattungsteils. Damit ist das abgetrennten öffnungsabschnitts nur noch über das relativ weiche Fangband verbunden, was in einer unvorhersehbaren Dynamik des losen Teils resultieren kann.

Ein anderes typisches Innenausstattungsteil mit einer Gassackeinrichtung zum Einbau in ein Kraftfahrzeug zeigt die amtliche Veröffentlichung DE 297 11 679 U1. Dort ist gleichfalls vorgesehen, den Deckel oder Öffnungsabschnitt in dem Träger durch ein Fangband zu sichern. Auch diese Ausführungsform sieht ein Abtrennen des Öffnungsabschnitts von dem Träger vor.

Ferner offenbart die Druckschrift DE 297 08 446 U1 verschiedene Möglichkeiten zur Befestigung eines Fangbands an dem zu sichernden Öffnungsabschnitt des Trägers einer Gassackabdeckung. Insbesondere sind dort Möglichkeiten beschrieben, das Fangband mit dem Öffnungsabschnitt des Trägers durch Umspritzen oder Umschäumen ausreichend haltbar zu verbinden.

Eine alternative zu losen Fangbändern offenbart die Druckschrift DE 44 37 773 C1. Darin wird vorgeschlagen, den Öffnungsabschnitt mit einer oberflächlich befestigten Verstärkungslage gegen ein Abreißen zu sichern. Allerdings kann wegen der Verstärkungslage ein Schusskanal oder ein anderweitig den Entfaltungsraum des Gassacks begrenzendes Bauelemcnt nicht mit der Unterseite des Trägers verklebt oder verschweißt werden. Zudem benötigt die sichere Anbringung der Verstärkungslage einen ausgedehnten Randbereich neben dem Öffnungsabschnitt.

Hinsichtlich der vorstehend angegebenen bekannten Bauformen und Ausführungsweisen stellt sich die vorliegende Erfindung die Aufgabe, einen Aufbau für ein Innenausstattungsteil mit einer Gassackeinrichtung vorzuschlagen, mit dem die Befestigung eines Fangbands in besonders einfacher Weise bei der Montage des Gassackmoduls erfolgen kann.

Diese Aufgabe löst die vorliegende Erfindung durch ein Innenausstattungsteil mit der im nachstehenden Hauptanspruch angegebenen Merkmalskombination.

In einer vorteilhaften Weiterbildung der vorliegenden Erfindung kann vorgesehen sein, dass die Anbringung des Fangbands möglichst exakt an der Scharnierlinie des öffnungsabschnitts ansetzt und das Fangband von dort aus annähernd straff durch den Schusskanal bis zur anderen Anbindungsstelle verläuft. Dies ergibt eine nur geringfügig nachgiebige Unterstützung des Öffnungsabschnitts an der vorgesehenen Scharnierlinle. Diese kann sich dann nicht unter der Kraft des expandierenden Gassacks in eine gekrümmte Gestalt aufwölben mit der Folge des Bruchs oder des Einreißens. Ein unerwünschtes Abreißen des Öffnungsabschnitts an der Scharnierlinie beim Entfalten des Gassacks könnte andernfalls in einer undefinierten Dynamik des abgetrennten Teils resultieren und eine unvorhersehbare Verletzungsgefahr begründen.

In einer noch weiteren vorteilhaften Weiterbildung der vorliegenden Erfindung kann vorgesehen sein, dass der erste Abschnitt des Haltebandes in einem ersten Schritt in eine separate Kunststoffplatte eingespritzt ist. Die Kunststoffplatte wird anschließend im Bereich des Öffnungsabschnitts des Trägers verschweißt. Dadurch ergeben sich Vorteile bei der Herstellung. Die Kunststoffplatte mit eingespritztem Halteband und der Träger können zunächst getrennt hergestellt werden.

Eine vorteilhafte Weiterbildung der vorliegenden Erfindung sieht vor, dass der Öffnungsabschnitt in an sich bekannter Weise durch eine geschlossene Aufreißlinie definiert wird. Dadurch wird bei Betätigung des Airbags der gesamte Öffnungsabschnitt komplett abgesprengt. Hierbei erweist es sich weiterhin als vorteilhaft, wenn der abgesprengte Deckel dann mittels eines an der Rückseite des Öffnungsbereichs und dem Schusskanal befestigten Haltebands gehalten wird.

In dieser Ausgestaltung empfiehlt es sich, das Halteband ausgehend vom Öffnungsabschnitt nicht straff durch den Schusskanal bis an die Verbindungsstelle zum Gassackmodul zu führen, sondern ist durch eine Dehnungsfalte in Form einer Schlaufe nachgiebig auszugestalten. Die Schlaufe ist vorzugsweise 10 - 20 mm lang ausgebildet.

Noch weitere vorteilhafte Ausgestaltungen der vorliegenden Erfindung sind in den Unteransprüchen angegeben.

Eine bevorzugte Ausführungsform der vorliegenden Erfindung wird nachfolgend beispielshalber beschrieben, wobei auf die anhängenden Zeichnungen Bezug genommen wird. Darin zeigen:
- Fig. 1: eine schematische vertikale Schnittansicht durch ein erstes Innenausstattungsteil mit einer Gassackeinrichtung;
- Fig. 2: eine perspektivische Teilschnittansicht durch die unterhalb des Trägers liegenden Teile des ersten Innenausstattungsteils gemäß Fig. 1; und
- Fig.3: eine schematische vertikale Teilschnittansicht durch ein zweites Innenausstattungsteil im Bereich des Öffnungsabschnitts mit angeschweißter Platte.

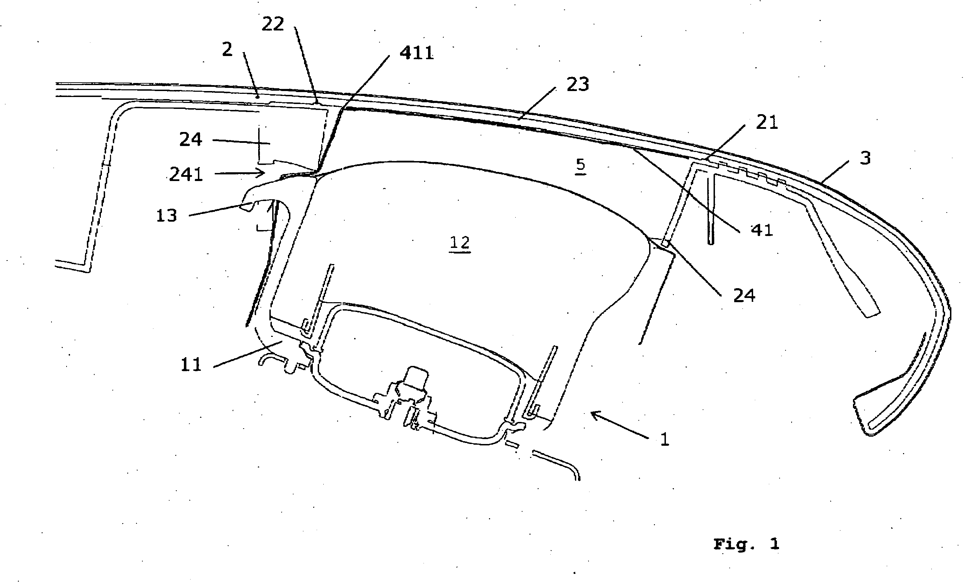

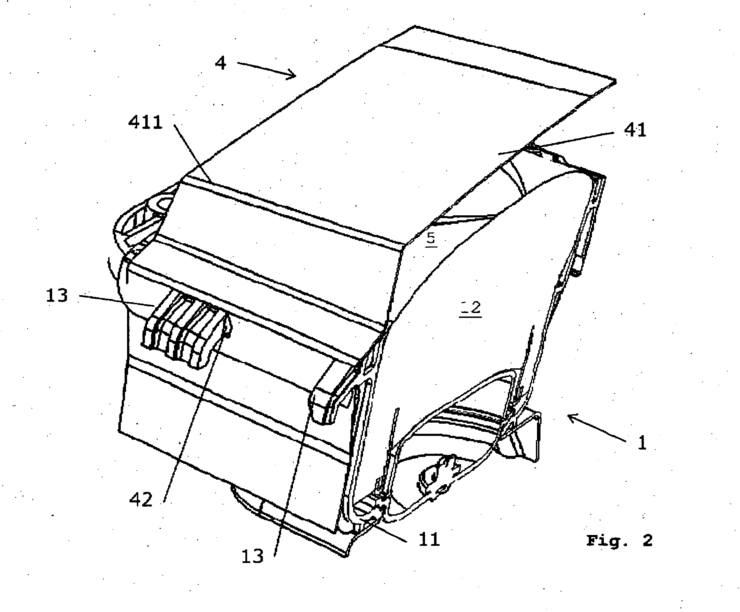

Gemäß den Fig. 1 und 2 umfasst ein erstes Innenausstattungsteil mit einer Gassackeinrichtung einen starren Träger 2. Die vorliegend nahezu ebene Oberseite des Trägers 2 weist nach dem Einbau des ersten Innenausstattungsteil zum Fahrgastraum und ist dazu vorgesehen, eine dekorative Schicht 3 zu tragen oder anderweitig dekorativ ausgebildet zu sein. Unterhalb des Trägers 2 ist in an sich bekannter Weise ein Gassackmodul 1 einer Insassenschutzeinrichtung angeordnet. Das Gassackmodul 1 umfasst ein topf- oder becherförmiges Gehäuse 11, in dem ein gefalteter Gassack 12 aufgenommen ist. Typisch ist innerhalb des Gehäuses 11 des Gassackmoduls 1 auch ein Gasgenerator zum Entfalten des Gassacks 12 vorgesehen. Zum Schutz des Gassacks 12 ist die Öffnung des Gehäuses 11 mit einer Schutzfolie oder dergleichen verschlossen.

Ein Öffnungsabschnitt 23 an dem Träger 2 ermöglicht den Austritt des Gassacks 12 bei dessen Entfaltung In den Bereich des Fahrgastraums. Der Öffnungsabschnitt 23 ist vorliegend in an sich bekannter Weise durch zusammen hängende Aufreiß- 21 und Scharnierlinien 22 definiert. Als Aufreißlinie 21 wird vorliegend ein annähernd linienförmig in besonderer Weise ausgestalteter Bereich in dem Material des Trägers 2 in Bezug genommen, an dem ein vorhersehbares Aufreißen des Materials unter der Wirkung einer vorbestimmten Kraft möglich ist. Im einfachsten Fall ist als Aufreißlinie 21 eine Linienperforation in das Material des Trägers 2 eingebracht. Bei der Schamlerlinie 22 handelt es sich gleichfalls um einen annähernd linienförmig besonders ausgestalteten Bereich des Trägermaterials, der ein Abknicken oder Scharnieren ermöglicht oder erleichtert. Vorliegend ist die Scharnierlinie 22 als geradlinige Rille ausgebildet.

Unterhalb des Öffnungsabschnitts 23 ist an dem Träger 2 ein Schusskanal 24 angeordnet. Der Schusskanal 24 begrenzt einerseits den Entfaltungsraum 5 des Gassacks 12 nach den Seiten und richtet dadurch die Wirkung des sich entfaltenden Gassacks 12 auf den Öffnungsabschnitt 23 aus. Weiterhin dient der Schusskanal 24 als Flansch oder Mündung zur Anbringung des Gassackmoduls 1 an dem Träger 2. Der Schusskanal 24 kann mit den Träger 2 einstückig gefertigt sein oder separat davon hergestellt und nachfolgend dauerhaft an dem Träger 2 befestigt werden. Die beschriebene Ausführungsform sieht einen separat hergestellten Schusskanal 24 vor, der vermöge einer geeignet gewählten Materialpaarung mit dem Träger 2 dauerhaft verschweißt ist.

Die Anbindung des Gassackmoduls 1. am Schusskanal 24 kann in einfacher Weise bewirkt werden durch Vorsprünge 13 oder hakenförmige Rastnasen an dem Gehäuse 11 des Gassackmoduls 1; die in korrespondierende Aussparungen oder Durchbrüche an dem SchussKanal 24 eingreifen. An den Querkanten oder auf der zu der Rastverbindung gegenüber liegenden Kante ist das Gassackmodul 1 in konventioneller Weise durch Schraubverbindungen gehalten.

Zur Entlastung des Öffnungsabschnitts 23 gegenüber dem Druck des sich entfaltenden Gassacks 12 ist ein Halteband 4 vorgesehen. Ein erster Abschnitt 41 davon ist mit dem Öffnungsabschnitt 23 des Trägers 2 vorzugsweise flächig verbunden. Besonders vorteilhaft ist es, diese Verbindung möglichst nahe an die SChamiertinie 22 auszubilden und zu dieser auszurichten. Ausgehend vom Öffnungsabschnitt 23 verläuft das Halteband 4 vorzugsweise straff durch den Schusskanal 24 bis an die Verbindungsstelle zum Gassackmodul 1.

Das Halteband 4 kann ausgehend vom Öffnungsabschnitt 23 entweder straff oder mit Übermaß durch den Schusskanal bis an die Verbindungsstelle zum Gassackmodul verlaufen. Eine nachgiebige Ausgestaltung des Haltebands 4 wird dabei durch eine Dehnungsfalte in Form einer Schlaufe erzielt, die vorzugsweise 10 -15 mm lang ausgebildet ist. Der bei einer Expansion des Gassacks längs der umlaufenden Aufreißlinie abreißende Öffnungsabschnitt 23 wird mittels des Haltebandes 4 festgehalten.

An der Verbindungsstelle zum Gassackmodul ist das Halteband 4 zur Ausbildung eines Gegenlagers befestigt. In der gezeigten Ausführungsform wird die Befestigung vorteilhaft dadurch bewirkt, dass in dem Halteband 4 zu den Vorsprüngen 13 an dem Gehäuse 11 des Gassackmoduls 1 korrespondierende Durchbrüche oder Ausnehmungen 241 angelegt sind. Dadurch kann das Halteband 4 wie dargestellt von der Rastverbindung zwischen Schusskanal 24 und Gassackmodul 1 durchgriffen werden.

Bei der Auslösung der Insassenschutzeinrichtung wird der Gassack durch das Gas aus dem Gasgenerator aufgeblasen und aus dem Gehäuse 11 in den Schusskanal 24 ausgestoßen. Sobald der Gassack den Entfaltungsraum 5 vollständig einnimmt, wirkt der Gasdruck gleichmäßig auf den Öffnungsabschnitt 23 des Trägers 2. Das straff geführte Halteband 4 stützt dabei den Öffnungsabschnitt im Bereich der Scharniel1inie 22 gegen den Gasdruck ab. Sobald die durch den Gassack auf den Öffnungsabschnitt eingeleitete Kraft einen vorbestimmten Umfang überschreitet, reißt oder bricht der Öffnungsabschnitt 23 klappenartig aus dem Träger 2 heraus. Der Öffnungsabschnitt 23 bleibt jedoch über die Scharnierlinie 22 sicher mit dem Träger 2 verbunden und verschwenkt um die Randkante 411 der Anbindung zu dem Halteband 4 in eine geöffnete Stellung.

Falls die Schamier1inie 22 zu der erwähnten Randkante 411 beabstandet ist, bewirkt dies beim Aufschwenken des Öffnungsabschnitts 23 ein Herabdrücken des an die Scharnierlinie 22 angrenzenden Trägerteils. Dieser Effekt ist jedoch unproblematisch und führt nicht zu einer Beschädigung des Öffnungsabschnitts 23, der Scharnierlinie 22 oder des Trägers 2, wenn der Abstand zwischen Randkante 411 und Scharnierlinie 22 gering bemessen ist. Der vorstehend beschriebene Effekt ist nicht vorhanden, wenn die Randkante 411 mit der Scharnielinie 22 exakt zusammenfällt.

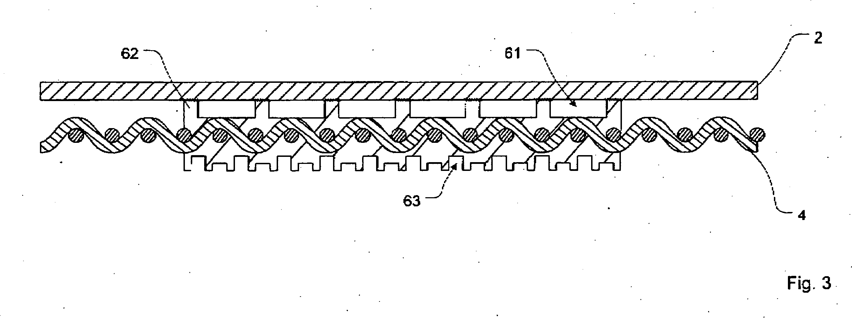

Fig. 3 zeigt in einer Teilansicht eine Teilschnittansicht durch ein zweites Inrienausstatttingsteil gemäß der vorliegenden Erfindung. Dieses weicht von dem mit Bezug auf die Fig. 1 und 2 beschriebenen ersten Innenausstattungsteil insofern ab, als das Halteband 4 in eine separate Kunststoffplatte 8 eingespritzt ist. Die Kunststoffplatte 6 besitzt im dargestellten Ausführungsbeispiel eine Struktur, die beidseits wabenförmigen Vertiefungen 61 aufweist, Zwischen den Vertiefungen 61 verbleiben dementsprechend stegförmige Vorsprünge 62. Die Vertiefungen können auch rechteckig ausgebildet sein. Auf der Rückseite der Kunststoffplatte 6 sind zur Materialeinsparung und wegen der Fertigungsgerechtigkeit Löcher 63 oder andere Vertiefungen angelegt. Die in diese Löcher oder Vertiefungen 63 hinein ragenden Werkzeugteile halten das Gewebeband im Werkzeug in der gewünschten Ebene. Die Kunststoffplatte 6 mit dem eingespritztern Halteband 4 ist im Bereich des Öffnungsabschnitts 23 des Trägers 2 mit dessen Unterseite entlang der stegförmigen Vorsprünge 62 verschweißt. Durch die mehrteilige Ausführung kann der Träger 2 in konventioneller Weise hergestellt werden, ohne dass dadurch eine Verklebung notwendig wird. Die Schweißverbindung stellt in der Regel fertigungstechnisch einen geringeren Aufwand dar, weil der Schusskanal 24 gleichfalls durch eine Verschweißung mit dem Träger 2 verbunden ist. Ein zusätzlicher Aufwand ergibt sich demnach nur durch eine zusätzliche Verbindung dieser Art. Eine Verklebung stellte hierzu eine insgesamt fremdartige Verbindungstechnik dar.

### Bezugszeichen

| | |
|---|---|
| Gassackmodul | 1 |
| Gehäuse | 11 |
| Gassack | 12 |
| Vorsprünge | 13 |
| Träger | 2 |
| Aufreißlinie | 21 |
| Scharnierlinie | 22 |
| Öffnungsabschnitt | 23 |
| Schusskanal | 24 |
| Ausnehmungen | 241 |
| Dekor | 3 |
| Halteband | 4 |
| Erster Abschnitt | 41 |
| Randkante | 411 |
| Durchbrechungen | 42 |
| Entfaltungsbereich | 5 |
| Kunststoffplatte | 6 |
| Vertiefungen | 61 |
| Stegförmige Vorsprünge | 62 |
| Löcher oder Aussparungen | 63 |

## Patentansprüche

1. Innenausstattungsteil mit einer Gassackeinrichtung, aufweisend ein GassaCkmodul (1) mit einem topfförmigen Gehäuse (11) zur Aufnahme eines Gassacks (12) und einen formstabilen Träger (2) mit einem durch Aufreiß- (21) und/oder Schamierlinien (22) definierten öffnungsabschnitt (23) und einem davon einseitig abstehenden Schusskanal (24) zur Ausrichtung der Entfaltung des Gassacks (12) auf den Öffnungsabschnitt (23), wobei das Gassackmodul (1) am abstehenden Ende des Schusskanals (24) angeordnet ist, **dadurch gekennzeichnet, dass** an dem Öffnungsabschnitt (23) ein erster Abschnitt (41) eines Haltebands (4) angebracht ist, das innerhalb des Schusskanals (24) bis zur Ansatzstelle des Gassackmoduls (1) verläuft und dort befestigt ist.

2. Innenausstattungstell mit einer Gassackeinrichtung nach Anspruch 1, wobei das Halteband (4) durch eine Fuge zwischen Gassackmodul (1) und Schusskanal (24) aus dem Entfaltungsbereich (5) des Gassacks heraus geführt und dort befestigt ist.

3. Innenausstattungsteil mit einer Gassackeinrichtung nach Anspruch 2, wobei das Halteband (4) Durchbrechungen (42) aufweist zur formschlüssigen Anhängung an Vorsprüngen (13) am Schusskanal (24) oder am Gassackmodul (1).

4. Innenausstattungsteil mit einer Gassackeinrichtung nach Anspruch 3, wobei die Vorsprünge (13) weiterhin zwischen Gassackmoduls (1) am Schusskanal (24) eine die Durchbrechungen (42) in dem Halteband (4) durchgreifende Verrastung bewirken.

5. Innenausstattungsteil mit einer Gassackeinrichtung nach einem der vorangehenden Ansprüche, wobei die Anbringung des Haltebands (4) am Öffnungsabschnitts (23) in der Nähe und/oder ausgerichtet zu der Scharnierlinie (22) ansetzt, um bei der Entfaltung des Gassacks (12) die Scharnierlinie (22) gegenüber den Öffnungskräften zu entlasten.

6. Innenausstattungsteil mit einer Gassackeinrichtung nach Anspruch 5, wobei die Anbringung des Haltebands (4) am Öffnungsabschnitts (23) eine flächige Verbindung ist, die entlang eines wesentlichen Abschnitts der Scharnielinie (22) ansetzt.

7. Innenatisstattungstell mit einer Gassackeinrichtung nach einem der vorangehenden Ansprüche, wobei der erste Abschnitt (41) des Haltebands (4) mit dem Öffnungsabschnitt des Trägers (2) verklebt ist.

8. Innenausstattungsteil mit einer Gassackeinrichtung nach einem der Ansprüche 1, 5 oder 6, wobei das Halteband (4) in dem ersten Abschnitt (41) vorzugsweise kleine Löcher oder Poren aufweist, die von dem Material des Trägers (2) zur Ausbildung einer formschlüssigen Verbindung durchsetzt sind.

9. fnnenausstattungsteil mit einer Gassackeinrichtung nach Anspruch 8, wobei das Halteband (4) eine textile Struktur aufweist, deren Fasern in das Material des Trägers (2) eingebettet sind.

10. Innenausstattungsteil mit einer Gassackeinrichtung nach Anspruch 9, wobei der Träger (2) aus einem thermoplastischen Kunststoffmaterial besteht und die Einbettung des ersten Abschnitts (41) des Haltebands (4) durch Umspritzen, Umschäumen, Hinterspritzen oder Hinterpressen erhältlich ist.

11. Innenausstattungsteil mit einer Gassackeinrichtung nach einem der vorangehenden Ansprüche, wobei das Halteband (4) annähernd straff durch den Schusskanal (24) Verläuft.

12. Innenausstattungsteil mit einer Gassackeinrichtung nach einem der vorangehenden Ansprüche, wobei der erste Abschnitt des Haltebands (41) in eine separate Platte, insbesondere eine Kunststoffplatte (6) eingespritzt ist, und die Platte (6) im Bereich des Öffnungsabschnitts (23) mit dem Träger (2) verschweißt ist.
